# FASCICULE DE BREVET EUROPEEN

(11) **EP 2 417 661 B1**
(45) Date de publication et mention de la délivrance du brevet: **10.07.2013**
(21) Numéro de dépôt: 10710033.1
(22) Date de dépôt: 23.03.2010
(51) Int. Cl.: H01M 8/02, H01M 4/86, H01M 8/18, H01M 8/20, H01M 4/88, C25B 11/03

(54) **CELLULE ELECTROCHIMIQUE A FLUX D'ELECTROLYTE COMPORTANT DES ELECTRODES TRAVERSANTES ET PROCEDE DE FABRICATION**
ELEKTROCHEMISCHE ZELLE MIT EINEM ELEKTROLYTFLUSS MIT DURCHGANGSELEKTRODEN UND HERSTELLUNGSVERFAHREN
ELECTROCHEMICAL CELL WITH AN ELECTROLYTE FLOW, COMPRISING THROUGH-ELECTRODES AND PRODUCTION METHOD

(30) Priorité: 06.04.2009 FR 0901667
(43) Date de publication de la demande: 15.02.2012
(73) Titulaire: Commissariat à l'Énergie Atomique et aux Énergies Alternatives, 75015 Paris (FR)
(72) Inventeur: KIRCHEV, Angel Zhivkov, F-73100 Aix-les-Bains (FR); KIRCHEVA, Nina, F-73100 Aix-les-Bains (FR)
(74) Mandataire: Talbot, Alexandre
(86) Numéro de dépôt international: PCT/EP2010/053750
(87) Numéro de publication internationale: WO 2010/115703

(56) Documents cités:
- WO-A-01/15792
- US-A- 3 825 460
- US-A- 5 451 444
- US-A1- 2005 084 737

## Description

### Domaine technique de l'invention

L'invention concerne une cellule électrochimique à flux d'électrolyte comportant au moins deux électrodes ayant des faces principales planes et parallèles, chaque électrode comportant une structure avec un réseau de passages traversants et perpendiculaires aux faces principales de l'électrode.

L'invention concerne également un procédé de fabrication d'une telle cellule.

### État de la technique

Ce type de cellule est adapté pour des applications de stockage d'énergie telles que les batteries. Dans un premier type de batterie électrochimique à circulation d'électrolyte, les batteries à flux redox, les espèces qui prennent part aux réactions électrochimiques sont complètement dissoutes dans l'électrolyte. C'est notamment le cas des batteries au vanadium.

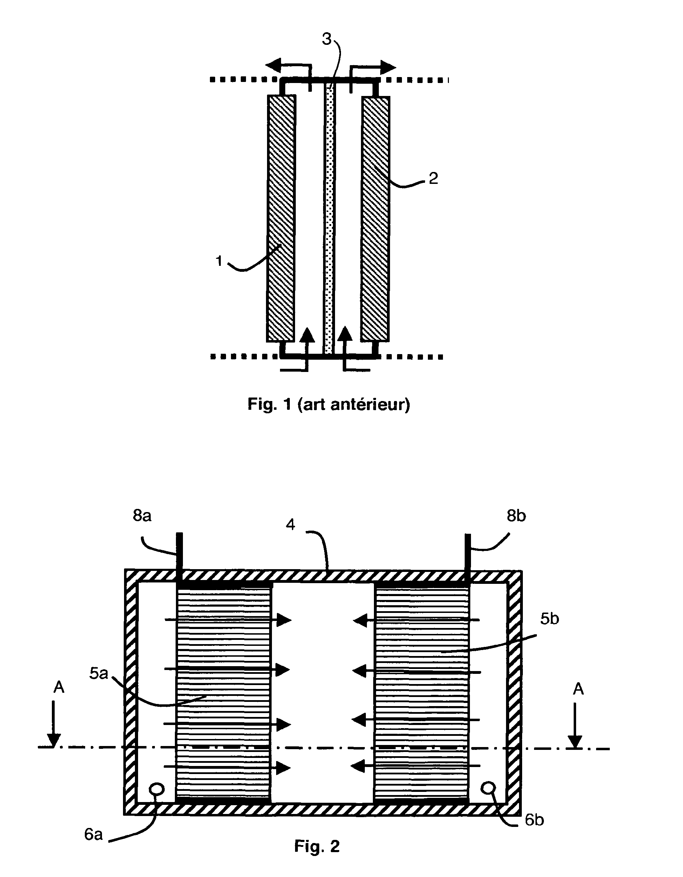

L'article "Handbook of Batteries" de Paul C. Butler et al. (3rd ed., chapter 39 "Zinc/Bromine Batteries", 2002) décrit une batterie Zinc/Bromure, dans laquelle une des espèces électrochimiques est déposée sous la forme d'une couche solide de zinc. La figure 1 représente une de ces cellules. Elle comporte au moins deux électrodes bipolaires 1 et 2, en matériau composite à base de carbone et de polymère, formées par moulage par injection. Un séparateur en polymère 3 est disposé entre les deux électrodes lorsque la cellule utilise deux électrolytes. Ainsi, une face du séparateur est en contact avec un électrolyte cathodique et l'autre face en contact avec un électrolyte anodique. Cette cellule est alimentée par un flux d'électrolyte vertical, c'est à dire parallèle aux surfaces principales des électrodes 1 et 2. Dans cette configuration, la puissance de la cellule est proportionnelle à la surface géométrique des électrodes en contact avec l'électrolyte associé. La fabrication de cellules de forte puissance est alors difficile à cause de la grande taille des électrodes. En outre, le pompage dans des grandes cellules est difficile. Un autre inconvénient de cette technologie est la dégradation des structures en matériau composite lors du vieillissement de la batterie.

Il a été proposé dans le document US 2005/084737 une cellule électrochimique comprenant deux électrodes planes et parallèles. Chaque électrode comprend une pluralité de passages traversants pour la circulation d'un électrolyte.

Par ailleurs, le document WO01/15792 décrit une électrode pour la déionisation de l'eau. L'eau circule dans des pores d'une face à l'autre de l'électrode.

Ces électrodes présentent néanmoins une résistance faible aux contraintes mécaniques et une conduction du courant limitée.

### Objet de l'invention

L'invention a pour but une cellule électrochimique et un procédé de fabrication d'une cellule électrochimique remédiant aux inconvénients de l'art antérieur. Plus particulièrement, l'invention a pour but une cellule électrochimique solide et compacte, facile à réaliser, tout en ayant un rendement élevé.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente une cellule électrochimique selon l'art antérieur.
- la figure 2 représente, schématiquement et en coupe, une cellule selon l'invention, utilisant un seul électrolyte.
- la figure 3 représente, schématiquement et en coupe, une cellule selon l'invention, utilisant deux électrolytes.
- la figure 4 représente un premier mode de réalisation d'une électrode d'une cellule selon l'invention.
- la figure 5 représente un second mode de réalisation d'une électrode d'une cellule selon l'invention.
- les figures 6 et 7 représentent différentes étapes d'un procédé de fabrication d'électrodes d'une cellule selon les figures 2 ou 4.
- la figure 8 représente, schématiquement et en coupe selon A-A, la cellule selon la figure 2.

### Description de modes particuliers de réalisation

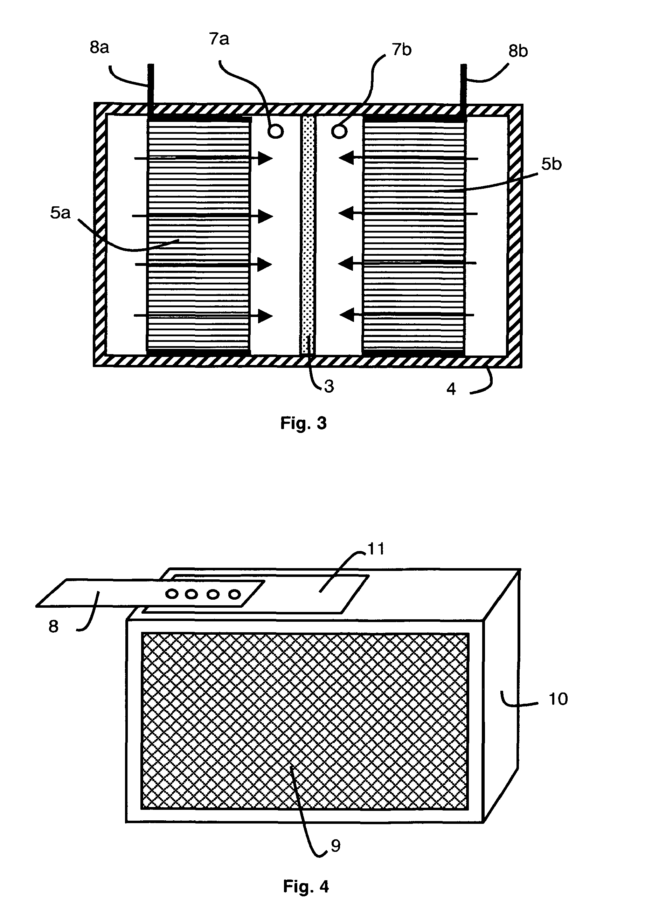

La figure 2 illustre, en coupe, un mode particulier de cellule électrochimique à flux d'électrolyte selon l'invention. La cellule comporte classiquement, dans un boîtier 4, deux électrodes 5a et 5b, éventuellement séparées par un séparateur 3 (fig. 3). La cellule comporte au moins deux entrées distinctes, chaque entrée étant associée à une électrode, et au moins une sortie. Deux orifices d'entrée 6a et 6b formés dans la paroi avant du boîtier 4 sont représentés à la figure 2 et deux orifices de sortie 7a et 7b, formés dans la paroi arrière du boîtier 4 sont représentés à la figure 3. Sur la figure 2, l'électrolyte entre par l'orifice d'entrée 6a dans le volume compris entre l'électrode 5a et la paroi correspondante du boîtier 4. De manière analogue, l'électrolyte entre par l'orifice d'entrée 6b dans le volume compris entre l'électrode 5b et la paroi correspondante du boîtier 4. Chaque électrode comporte une structure 9 (fig. 4) avec un réseau de passages traversant d'une face principale à l'autre. Les passages sont perpendiculaires aux faces principales de l'électrode. Ils sont, de préférence, tous identiques et séparés par des parois fines faiblement poreuses (porosité: 5-10%). La section transversale de chaque passage peut être circulaire, hexagonale, carrée, rectangulaire... Le réseau ainsi formé est, de préférence, un réseau régulier, par exemple sous forme de nid d'abeille.

L'électrolyte circule ainsi par les passages des électrodes 5a et 5b, traverse le volume compris entre les électrodes 5a et 5b et est évacué par un orifice de sortie non représenté sur la figure 2. Dans le mode de réalisation particulier de la figure 3, avec séparateur 3, un premier électrolyte entre par l'orifice d'entrée 6a, traverse l'électrode 5a et ressort par un premier orifice de sortie 7a. De manière analogue, un deuxième électrolyte entre par l'orifice d'entrée 6b, traverse l'électrode 5b et ressort par un second orifice de sortie 7b. Enfin, des collecteurs métalliques 8a et 8b acheminent le courant vers l'extérieur de la cellule et constituent les bornes positive et négative de la cellule. Les orifices d'entrée 6a et 6b sont, de préférence, situés dans la partie basse de la paroi avant du boîtier 4, tandis que les orifices de sortie, 7a et 7b, sont, de préférence, situés dans la partie haute de la paroi opposée (paroi arrière).

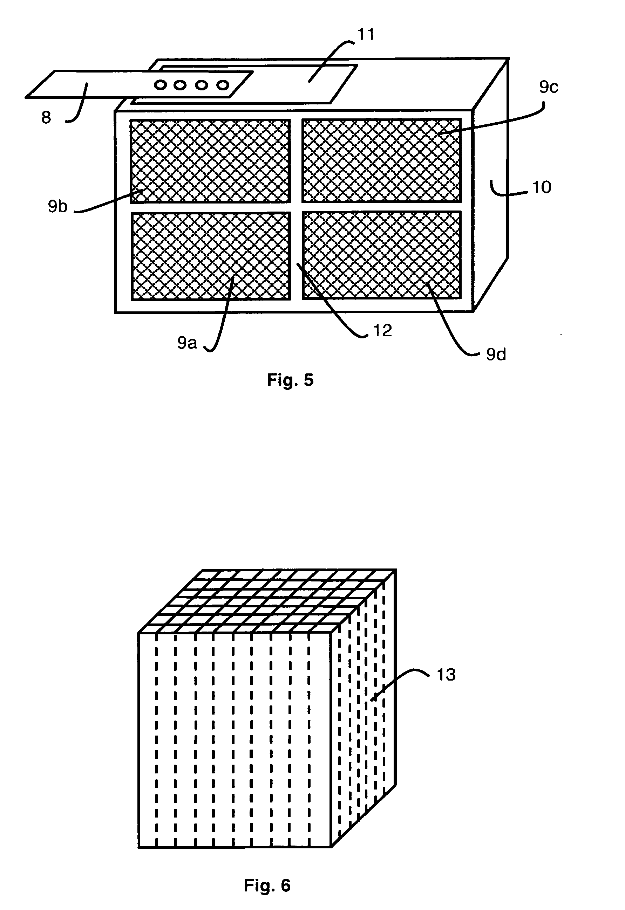

La figure 4 représente, en perspective, une électrode comportant la structure 9. La structure 9 est entourée d'une armature externe 10, massive, c'est-à-dire compacte et le moins poreuse possible. Une zone 11 d'une face externe de l'armature 10 est métallisée et un collecteur métallique de courant 8 est soudé sur la zone 11. Les autres faces externes de l'armature 10 sont, de préférence, collées aux parois internes du boîtier 4. Dans le cas d'une électrode de grandes dimensions, illustré à la figure 5, la structure 9 est, de préférence, divisée en structures élémentaires, quatre sur la figure 5, (9a, 9b, 9c et 9d), plus petites, séparées par une armature interne 12.

La structure 9 et l'armature externe massive 10 sont à base de carbone, par exemple, en carbone vitreux. Les passages étant ordonnés et homogènes, la distribution du flux d'électrolyte dans le réseau est également homogène, en particulier pour des passages d'une taille (diamètre ou côté) de 1 mm à 4mm et d'une longueur de 10 à 20mm. Avec ces dimensions, la cellule conserve un excellent pouvoir couvrant, « throwing power » en anglais, sur toute la longueur du passage. Le pouvoir couvrant représente la distribution de la densité de courant le long d'un passage et dépend généralement de deux paramètres : le potentiel électrostatique et la concentration des réactifs. La concentration de réactifs diminue plus on s'éloigne de l'entrée du passage, à cause des réactions en jeu qui consomment les réactifs. A l'inverse, le potentiel diminue dans le sens opposé à cause des effets ohmiques et électrostatiques. Ces deux paramètres évoluent donc dans des sens opposés. De ce fait, la densité de courant, qui résulte de la combinaison de ces deux paramètres, est quasiment homogène le long d'un passage. Ainsi, la surface active de cette cellule participe de manière homogène aux procédés électrochimiques de charge et de décharge.

Dans un mode de réalisation particulier, la face principale de la structure 9 de chaque électrode est un carré de 24cm de côté et la structure 9 a une épaisseur de 2cm. Les passages ont une section carrée de 1 mm de côté, séparés par des parois de 0,2mm d'épaisseur. Le nombre de passages formés dans la structure de l'électrode est alors de 40000. Les surfaces internes de chaque passage en contact avec l'électrolyte, correspondent à 0,8cm² et la surface active totale du réseau est alors de 32000cm². Avec une armature 10 de 0,5 cm d'épaisseur, la cellule mesure 25x25cm avec une épaisseur de 6cm. Le volume de la cellule est alors de 3750cm³. Le rapport entre la surface active des deux électrodes et le volume de la cellule est alors de 17cm²/cm³, soit 8,5 fois plus qu'une cellule avec des électrodes bipolaires selon l'art antérieur. En effet, dans une cellule selon l'art antérieur dont la section est de 24x24cm et l'épaisseur de 1 cm, la surface en contact d'une électrode est de 576cm² pour un volume de la cellule de 576cm³. Le rapport de la surface active des deux électrodes sur le volume de la cellule est dans ce cas de 2cm²/cm³. La cellule suivant l'invention présente donc une surface de contact 8,5 fois plus importante qu'une cellule avec la configuration bipolaire de même volume.

La structure 9 de la cellule décrite ci-dessus est, de préférence, fabriquée au moyen d'un procédé décrit dans le brevet US3825460. Des tubes en papier sont ainsi imprégnés d'au moins une résine thermodurcissable à base de carbone, puis arrangés pour former un support provisoire 13 en papier imprégné de résine comportant le réseau de passages, comme illustré sur la figure 6. La résine est apte à être carbonisée, c'est-à-dire à être transformée en carbone par un traitement thermique. La résine est durcie, par exemple, grâce à un durcisseur mélangé à la résine ou par chauffage à 60°C. Un traitement thermique est réalisé pour transformer la structure comportant ledit réseau en carbone. Des supports en papier imprégnés de résine sont disponibles commercialement à bas coût, notamment avec une taille (diamètre ou côté) de passage de 1 à 4mm et des parois de l'ordre de 0,1 mm d'épaisseur.

Cette structure en carbone telle que décrite dans le brevet US3825460 ne serait pas utilisable directement en tant qu'électrode. En effet, la capacité de transport du courant sur le périmètre de la structure n'est pas suffisante pour collecter tout le courant généré dans la structure. De plus, les parois extérieures de la structure n'ont pas une résistance mécanique suffisante pour l'intégration dans une cellule électrochimique. Par ailleurs, les parois extérieures de la structure ne fournissent pas un moyen adéquat pour la fixation d'un collecteur de courant.

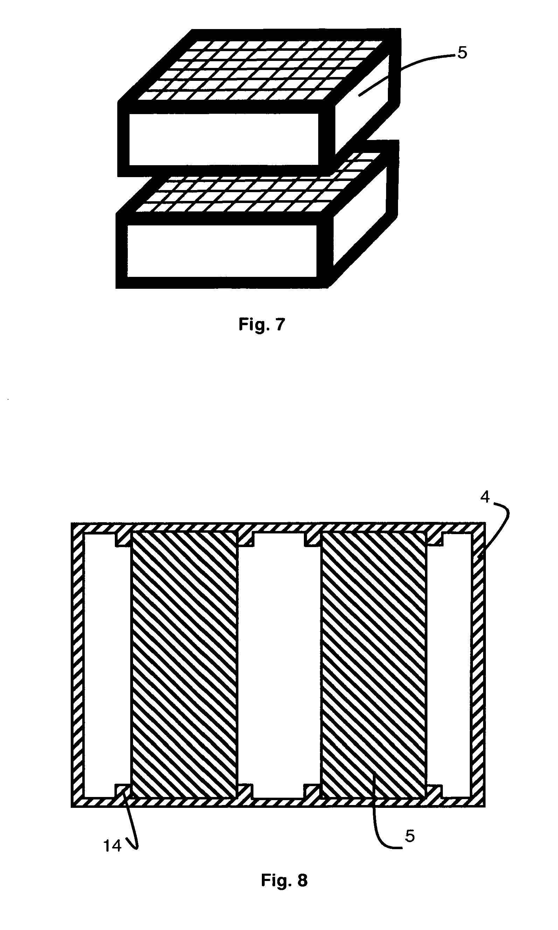

Comme indiqué ci-dessus, la structure ainsi obtenue est consolidée par une armature massive, formée autour de ses faces latérales extérieures. Le support 13 est placé, avant le traitement thermique, dans un moule pour former l'armature en utilisant un mélange comportant au moins une résine thermodurcissable à base de carbone, et avantageusement des fibres de carbone et un solvant. Au préalable, les entrées-sorties des passages ont été fermées afin d'empêcher l'entrée du mélange dans les passages. Cette résine est, de préférence, la même que celle utilisée pour imprégner le support provisoire 13. La concentration des fibres de carbone varie, de préférence, de 1 à 10% du poids de résine utilisée et celle du solvant de 5 à 15% du poids de résine utilisée. Ces additifs permettent une carbonisation ultérieure rapide sans créer de défauts dans l'armature. Après durcissement du mélange, le support 13 recouvert de son armature est sorti du moule, puis découpé en tranches à l'épaisseur désirée pour les électrodes 5 (fig. 7) en utilisant une scie à bande ou tout équipement similaire. Après le découpage, les faces externes de l'armature sont durcies pour faciliter les étapes de métallisation de la zone 11 et du collage des électrodes 5 dans la cellule. L'étape suivante est le traitement thermique des électrodes 5 ainsi formées dans une atmosphère inerte, à une température de 1000 à 1100°C. Durant cette étape, la résine à base de carbone de la structure 9 et la résine du mélange de l'armature 10 sont transformées en carbone, conducteur, ayant une excellente résistance chimique et mécanique. La dernière étape de la formation de l'électrode comporte la galvanisation de la zone 11 d'une face externe de l'armature avec du cuivre et le soudage consécutif du collecteur métallique de courant 8.

Dans le cas d'électrodes de grandes dimensions, la résistance ohmique au centre de la structure 9 peut limiter les performances de la cellule et le découpage en tranches peut occasionner des défauts physiques dans la structure. Dans de tels cas, le support provisoire est alors, de préférence, divisé en plusieurs blocs (fig. 5). Des espaces sont laissés dans le moule entre les blocs, qui sont ensuite remplis par le mélange contenant au moins la résine thermodurcissable, pour former l'armature interne 12 à base de carbone.

La cellule électrochimique comporte, de préférence, un couvercle qui scelle hermétiquement la cellule. Comme illustré sur la figure 8, le boîtier 4 comporte, de préférence, des nervures internes 14 de positionnement des électrodes 5. Les nervures 14 sont, par exemple, situées sur les deux parois opposées et sur le fond de la cellule. Une paire de nervures de positionnement du séparateur peut être ajoutée dans le cas d'une cellule avec séparateur. Les étapes de scellement de la cellule sont semblables à celles utilisées pour les batteries à circulation d'électrolyte existantes.

Les avantages d'une telle cellule sont le grand rapport entre la surface active et le volume, et l'utilisation de structures en carbone d'une plus grande résistance mécanique et chimique. Le transport du courant dans l'électrode est également amélioré, augmentant ainsi le rendement de la cellule.

## Revendications

1. Cellule électrochimique à flux d'électrolyte comportant au moins deux électrodes ayant des faces principales planes et parallèles, chaque électrode (5 ; 5a, 5b) comportant une structure (9) avec un réseau de passages traversants et perpendiculaires aux faces principales de ladite électrode, **caractérisée en ce que** ladite structure (9) est à base de carbone et comporte des faces latérales entourées par une armature (10) massive, à base de carbone.

2. Cellule selon la revendication 1, **caractérisée en ce qu'**elle comporte au moins deux entrées distinctes, chaque entrée étant associée à une électrode, et au moins une sortie.

3. Cellule selon l'une des revendications 1 et 2, **caractérisée en ce que** l'armature (10) est en carbone vitreux.

4. Cellule selon l'une quelconque des revendications 1 à 3, **caractérisée en ce que** la structure (9) est en carbone vitreux.

5. Cellule selon l'une quelconque des revendications 1 à 4, **caractérisée en ce que** l'électrode (5) est divisée en au moins deux parties par une armature interne (12), à base de carbone.

6. Cellule selon l'une quelconque des revendications 1 à 5, **caractérisée en ce que** l'armature (10) a au moins une zone (11) d'une face externe galvanisée avec du cuivre et connectée à un collecteur métallique de courant (8 ; 8a, 8b) par soudure.

7. Cellule selon l'une quelconque des revendications 1 à 6, **caractérisée en ce que** le réseau de passages est sous forme de nid d'abeille.

8. Cellule selon l'une quelconque des revendications 1 à 7, **caractérisée en ce qu'**elle comporte un boîtier (4) muni de nervures internes (14) de positionnement des électrodes.

9. Procédé de fabrication d'une cellule selon l'une quelconque des revendications 1 à 8, **caractérisé en ce que** la formation des électrodes comporte :
- la réalisation d'un support provisoire (13) imprégné d'une première résine thermodurcissable à base de carbone et comportant ledit réseau de passages,
- un moulage de l'armature (10), autour dudit support provisoire (13), avec un mélange comportant au moins une seconde résine thermodurcissable à base de carbone,
- le durcissement dudit mélange,
- le découpage en tranches pour former les électrodes (5)
- le traitement thermique pour obtenir une structure (9) et une armature (10) à base de carbone.

10. Procédé selon la revendication 9, **caractérisé en ce que** le support provisoire (13) est en papier.

11. Procédé selon l'une des revendications 9 et 10, **caractérisé en ce que** le mélange constituant l'armature (10) comporte, de plus, des fibres de carbone et un solvant inerte.

12. Procédé selon l'une quelconque des revendications 9 à 11, **caractérisé en ce qu'**il comporte successivement la galvanisation de la zone (11) d'une face externe de l'armature (10), avec du cuivre et le soudage d'un collecteur métallique de courant (8).

## Patentansprüche

1. Elektrochemische Zelle mit Elektrolytfluss, die wenigstens zwei Elektroden, welche plane und parallele Hauptseiten aufweisen, umfasst, wobei jede Elektrode (5; 5a, 5b) eine Struktur (9) mit einem Netz aus durchgehenden und zu den Hauptseiten der Elektrode senkrechten Gängen umfasst, **dadurch gekennzeichnet, dass** die Struktur (9) auf Kohlenstoffbasis ist und Seitenflächen umfasst, die von einer massiven Bewehrung (10) auf Kohlenstoffbasis umgeben sind.

2. Zelle nach Anspruch 1, **dadurch gekennzeichnet, dass** sie wenigstens zwei getrennte Eingänge, wobei jeder Eingang einer Elektrode zugeordnet ist, und wenigstens einen Ausgang umfasst.

3. Zelle nach einem der Ansprüche 1 und 2, **dadurch gekennzeichnet, dass** die Bewehrung (10) aus glasartigem Kohlenstoff besteht.

4. Zelle nach einem der Ansprüche 1 bis 3, **dadurch gekennzeichnet, dass** die Struktur (9) aus glasartigem Kohlenstoff besteht.

5. Zelle nach einem der Ansprüche 1 bis 4, **dadurch gekennzeichnet, dass** die Elektrode (5) durch eine Innenbewehrung (12) auf Kohlenstoffbasis in wenigstens zwei Teile unterteilt ist.

6. Zelle nach einem der Ansprüche 1 bis 5, **dadurch gekennzeichnet, dass** die Bewehrung (10) wenigstens einen Bereich (11) einer Außenseite aufweist, der mit Kupfer galvanisiert und an einen metallischen Stromkollektor (8; 8a, 8b) angeschweißt ist.

7. Zelle nach einem der Ansprüche 1 bis 6, **dadurch gekennzeichnet, dass** das Netz aus Gängen in Bienenwabenform vorliegt.

8. Zelle nach einem der Ansprüche 1 bis 7, **dadurch gekennzeichnet, dass** sie ein Gehäuse (4) umfasst, das mit Innenrippen (14) zum Positionieren der Elektroden versehen ist.

9. Verfahren zur Herstellung einer Zelle nach einem der Ansprüche 1 bis 8, **dadurch gekennzeichnet, dass** die Bildung der Elektroden umfasst:
das Ausbilden eines provisorischen Trägers (13), der mit einem ersten in Wärme aushärtendem Harz auf Kohlenstoffbasis imprägniert ist und das Netz aus Gängen umfasst,
- ein Formen der Bewehrung (10) um den provisorischen Träger (13) herum, mit einer Mischung, die wenigstens ein zweites in Wärme aushärtendes Harz auf Kohlenstoffbasis umfasst,
- das Aushärten der Mischung,
- das In-Scheiben-schneiden, um die Elektroden (5) zu bilden,
- die Wärmebehandlung, um eine Struktur (9) und eine Bewehrung (10) auf Kohlenstoffbasis zu erhalten.

10. Verfahren nach Anspruch 9, **dadurch gekennzeichnet, dass** der provisorische Träger (13) aus Papier besteht.

11. Verfahren nach einem der Ansprüche 9 und 10, **dadurch gekennzeichnet, dass** die die Bewehrung (10) bildende Mischung zudem Kohlenstofffasern und ein inertes Lösungsmittel umfasst.

12. Verfahren nach einem der Ansprüche 9 bis 11, **dadurch gekennzeichnet, dass** es nacheinander das Galvanisieren des Bereichs (11) einer Außenseite der Bewehrung (10) mit Kupfer und das Anschweißen eines metallischen Stromkollektors (8) umfasst.

## Claims

1. Electrochemical cell with an electrolyte flow comprising at least two electrodes having parallel flat main faces, each electrode (5; 5a, 5b) comprising a structure (9) with a network of through-passages perpendicular to the main faces of said electrode, **characterized in that** said structure (9) is carbon-based and comprises lateral faces surrounded by a carbon-based solid frame (10).

2. Cell according to claim 1, **characterized in that** it comprises at least two distinct inlets, each inlet being associated with an electrode, and at least one outlet.

3. Cell according to one of claims 1 and 2, **characterized in that** the frame (10) is made from vitreous carbon.

4. Cell according to any one of claims 1 to 3, **characterized in that** the structure (9) is made from vitreous carbon.

5. Cell according to any one of claims 1 to 4, **characterized in that** the electrode (5) is divided into at least two parts by a carbon-based inner frame (12).

6. Cell according to any one of claims 1 to 5, **characterized in that** the frame (10) has at least one area (11) of an outer face electroplated with copper and connected to a metallic current collector (8; 8a, 8b) by welding.

7. Cell according to any one of claims 1 to 6, **characterized in that** the network of passages is in the form of a honeycomb.

8. Cell according to any one of claims 1 to 7, **characterized in that** it comprises an enclosure (4) provided with inner ribs (14) for positioning the electrodes.

9. Method for producing a cell according to any one of claims 1 to 8, **characterized in that** formation of the electrodes comprises:
- making a temporary support (13) impregnated with a first carbon-based thermosetting resin and comprising said network of passages,
- moulding the frame (10) around said temporary support (13) with a mixture comprising at least a second carbon-based thermosetting resin,
- hardening of said mixture,
- cutting into slices to form the electrodes (5),
- heat treatment to obtain a carbon-based structure (9) and a carbon-based frame (10).

10. Method according to claim 9, **characterized in that** the temporary support (13) is made from paper.

11. Method according to one of claims 9 and 10, **characterized in that** the mixture constituting the frame (10) further comprises carbon fibers and an inert solvent.

12. Method according to any one of claims 9 to 11, **characterized in that** it successively comprises electroplating of the area (11) of an outer face of the frame (10) with copper, and welding of a metallic current collector (8).
